# EUROPEAN PATENT APPLICATION

(11) **EP 3 657 420 A1**
(43) Date of publication of application: **27.05.2020**
(21) Application number: 18208174.5
(22) Date of filing: 23.11.2018
(51) Int. Cl.: G06Q 20/40, G06Q 20/38, G06Q 20/10, G06Q 40/02

(54) **TRANSACTION SYSTEM CACHE RECONCILIATION**

(71) Applicant: Mastercard International Incorporated, Purchase NY 10577 (US)
(72) Inventor: GROARKE, Peter, Dublin 18 (IE); HOSNY, Ahmed, Dublin 18 (IE); NISTOR, Ionut, Dublin 7 (IE)
(74) Representative: Lawrence, Richard Anthony

(57) **Abstract**

A computing node comprises a processor and a transaction cache. The transaction cache comprises one or more function records for each of a plurality of account numbers. Each function record comprises an account number, a function identifier, and transaction identifiers for any qualifying transactions. A qualifying transaction is a transaction for that account number to be used in determining a value for a function identified by the function identifier. The computing node can receive notification of an authorisation request for a transaction pending authorisation from a transaction network and provide values for each of the functions associated with an account number from the function record for that function using the transaction identifiers in that function record. If the transaction pending authorisation is authorised, the computing node can then add a transaction identifier for that transaction to each function record for which that transaction is a qualifying transaction. The computing node is also adapted to use transaction identifiers to synchronise the function records of its transaction cache with the function records of transaction caches of computing nodes in other geographic locations. A transaction system comprising such computing nodes and a method of operating a transaction cache in a transaction system are also described.

## Description

### TECHNICAL FIELD

The present disclosure relates to transaction system cache reconciliation, and in embodiments to use of transaction caches across multiple geographical locations in a transaction network.

### BACKGROUND

Transactions typically require authorisation to ensure that they are being carried out by a legitimate party on a legitimate basis. Such authorisation is typically carried out by checking of user credentials, and by checking that the characteristics of the transaction are as expected. This can be straightforward in some contexts - for example, where it is simply necessary to check that presented credentials are correct for the expected transacting party - but more complex in others, where care needs to be taken to ensure that transaction characteristics are as expected. This is the case for a payment card scheme.

A payment card scheme - a payment network linked to a payment card - is typically based one of two models: a three-party model (adopted by American Express) or a four-party model (adopted by Visa and Mastercard). The relevant parties in the four-party model include a merchant, an acquirer, an issuer and a cardholder. Typically, the four party model of a credit card or debit card purchase involves an exchange of authorisation request and response messages between the parties prior to the settlement of funds between the cardholder and the merchant. The messages may include transaction data such as a primary account number, a transaction amount, a merchant identifier, and a date and time of the transaction.

The decision to approve or decline an authorisation request message is often made once a fraud or risk analysis is carried out. Current methods of fraud or risk analysis involve analysing the transaction data within the authorisation request message in conjunction with previous spending patterns of the cardholder by using rules engines. An important component of analysing a particular transaction is the ability to track cardholder spend across multiple transactions for a given filter, which is known as a velocity. Currently, velocity is tracked by summing the amount spent for each and every velocity. However, it is currently problematic to reconcile velocities in different geographical locations. Typically, velocities are manually updated in each of four or five sites. There is a lack of visibility between different regions in currently known systems and methods, and it is therefore very difficult to keep accounts synchronised across multiple regions.

The present disclosure has been devised to mitigate or overcome at least some of the above-mentioned problems.

### SUMMARY OF THE DISCLOSURE

According to a first aspect of the present disclosure there is provided a computing node comprising a processor and a transaction cache, wherein the transaction cache comprises one or more function records for each of a plurality of account numbers, wherein each function record comprises an account number, a function identifier, and transaction identifiers for any qualifying transactions, wherein a qualifying transaction is a transaction for that account number to be used in determining a value for a function identified by the function identifier, wherein the computing node is adapted to perform the following processes: receive notification of an authorisation request for a transaction pending authorisation from a transaction network; provide values for each of the functions associated with an account number from the function record for that function using the transaction identifiers in that function record; if the transaction pending authorisation is authorised, adding a transaction identifier for that transaction to each function record for which that transaction is a qualifying transaction; wherein the computing node is adapted to use transaction identifiers to synchronise the function records of its transaction cache with the function records of transaction caches of computing nodes in other geographic locations.

In embodiments, synchronising the function records of the transaction cache with transaction caches of computing nodes in other geographic locations may use an in-memory data grid.

In embodiments, each transaction identifier may comprise a plurality of transaction data elements, wherein one of the transaction data elements is a transaction time. One of the transaction data elements may be a transaction amount, and the functions associated with the one or more function records may be transaction velocities, wherein a transaction velocity is a sum of transaction amounts for all transactions for an account number conforming with a velocity rule for that transaction velocity in a predetermined period of time.

One of the transaction data elements may define a purchased product or service type, with one or more of the velocity rules relating to a defined purchased product or service type. One of the transaction data elements may define a merchant type, with one or more of the velocity rules relating to a defined merchant type. One of the transaction data elements may define a transaction type, with one or more of the velocity rules relating to a transaction type, such as a Customer Not Present transaction.

One or more of the transaction data elements comprised in the transaction identifier may be defined by ISO 8583. In certain cases, some of the transaction data elements comprised in the transaction identifier are defined by ISO 8583 and some are specific to the authorisation system. In other cases, all of the transaction data elements comprised in the transaction identifier are defined by ISO 8583. The transaction data elements comprised in the transaction identifier may comprise one or more of a Message Type Identifier, a System Trace Audit Number, a Transmission Date and Time, and an Acquiring Institution Identification Code.

The computing node may further comprise a fraud scoring system for the transaction network, wherein the fraud scoring system uses the transaction velocities in providing a fraud score for the transaction pending authorisation. This fraud scoring system may be adapted to provide the fraud score to the transaction network for use in determining whether to authorise the transaction pending authorisation, or may be adapted to refuse authorisation for the transaction pending authorisation on behalf of the transaction network if the fraud score is within predetermined parameters for refusal.

In a second aspect, the disclosure provides a transaction network adapted to receive transactions pending authorisation from transaction network terminals and to route them for authorisation by or on behalf of payment device issuers, the transaction network comprising a plurality of computing nodes as described above.

Such a transaction network may process transactions in accordance with EMV standards.

In a third aspect, the disclosure provides a method of operating a transaction cache in a transaction system, wherein the transaction cache comprises one or more function records for each of a plurality of account numbers, wherein each function record comprises an account number, a function identifier, and transaction identifiers for any qualifying transactions, wherein a qualifying transaction is a transaction for that account number to be used in determining a value for a function identified by the function identifier, the method comprising: receiving notification of an authorisation request for a transaction pending authorisation from an transaction network; providing values for each of the functions associated with an account number from the function record for that function using the transaction identifiers in that function record; if the transaction pending authorisation is authorised, adding a transaction identifier for that transaction to each function record for which that transaction is a qualifying transaction; using transaction identifiers, synchronising the function records of the transaction cache with the function records of transaction caches of computing nodes in other geographic locations.

Synchronising the function records of the transaction cache with transaction caches of computing nodes in other geographic locations may use an in-memory data grid. Each transaction identifier may comprise a plurality of transaction data elements, wherein one of the transaction data elements is a transaction time. One of the transaction data elements may be a transaction amount, and the functions associated with the one or more function records may be transaction velocities, wherein a transaction velocity is a sum of transaction amounts for all transactions for an account number conforming with a velocity rule for that transaction velocity in a predetermined period of time.

### BRIEF DESCRIPTION OF THE DRAWINGS

One or more embodiments of the disclosure will now be described, by way of example only, with reference to the accompanying drawings, in which:
Figure 1 is a schematic diagram illustrating a typical four-party model used in payment interactions between entities operating in a card scheme;
Figure 2 is a schematic diagram illustrating a request leg and a response leg of a conventional velocity tracking process;
Figure 3 is a schematic diagram illustrating velocity reconciliation between two different geographical locations, in accordance with an embodiment of the disclosure;
Figure 4 is a schematic diagram illustrating velocity key-value pairs, in accordance with an embodiment of the disclosure;
Figure 5 is a schematic diagram illustrating velocity reconciliation for four transactions between two different geographical locations, in accordance with an embodiment of the disclosure; and
Figure 6 is a depiction of a computing node in accordance with an embodiment of the disclosure.

### DETAILED DESCRIPTION

General and specific embodiments of the disclosure will be described below with reference to the Figures.

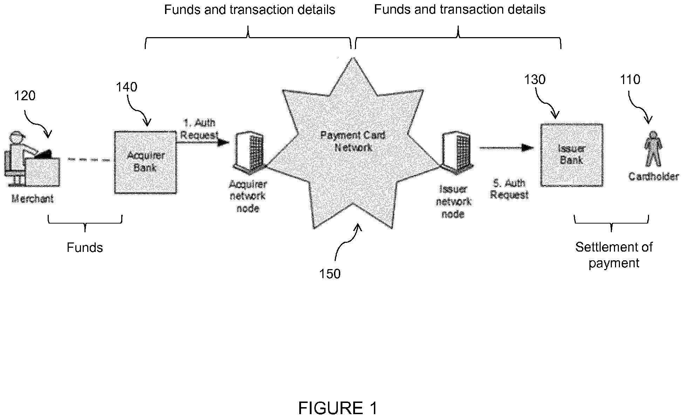

Figure 1 is a schematic diagram of a typical four-party model or four-party payment transaction scheme. The diagram illustrates the entities present in the model and the interactions occurring between entities.

Normally, card schemes - payment networks linked to payment cards - are based on one of two models: a three-party model (adopted by American Express) or a four-party model (adopted by Visa and Mastercard). For the purposes of this document, the four-party model 100 is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central payment card network 150 - interactions between the issuer 130 and the acquirer 140 are routed via the payment card network 150. The payment card network 150 enables a merchant 120 associated with one particular bank (acquirer 140) to accept payment transactions from a cardholder 110 associated with a different bank (issuer 130).

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the payment card network 150 to authorise the transaction. Should the transaction be considered abnormal by the issuer 130, the cardholder 110 may be required to undergo a verification process to verify their identity and the details of the transaction. Once the verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the payment card network 150. Upon receipt of these transaction details, the issuer 130 provides the settlement funds to the payment card network 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

Embodiments of the disclosure relate to operation of a transaction cache by a computing node in such a transaction system. This computing node may be associated with a fraud scoring process operated by a fraud scoring service. Such a service may provide a fraud score that can be used by the issuer (or by another entity, such as a merchant, an acquirer, or a card scheme acting on behalf of the issuer) to assist in determining whether or not a transaction should be authorised or declined. Such fraud scoring services typically use 'velocities' to provide the fraud score. In the system addressed by the embodiment, there are several such computing nodes, geographically dispersed, typically handling transactions in a local geography.

The term 'velocity' is here used to indicate a spend amount for a card, which may be across multiple transactions, for a given filter against time. These filters may be a transaction class, such as spend on fuel, or a transaction category, such as customer not present (CNP) transactions. The amount spent in a given filter, for example spending on petrol, is summed for one or more time windows once each transaction is completed. Typically, velocity checking involves determining whether a predetermined total spend for the filter category has occurred within a given time interval. For example, no more than a particular amount would be expected to be spent on a particular type of product, such as fuel, within a 24 hour period. It would become suspicious if more than the expected amount was spent on fuel. Typically velocities are tracked by PAN, and transaction data elements that may be used for velocity checking include the transaction amount and transaction time, and any data element that may be used to establish a filter (such as merchant type). Other transaction data elements that may be used are those relating to POS type and location (e.g. mail order, telephone order or e-commerce), merchant identifier, merchant location and transaction currency code.

Transaction data elements are defined in general terms by ISO 8583, which is an international standard for financial transaction card originated interchange messaging. Many fields are defined so that they will be used in a common way by everyone adhering to the standard, whereas others are reserved for private use - for example, for providing transaction system or card scheme specific solutions.

The transaction data elements include a number of time elements - potentially any of these could be used for identifying a transaction time in embodiments of the disclosure, either for use in velocity rules or for use in cache management. Possible candidates include the ISO standard field DE7 (transmission date and time), which is the date and time that a message is entered into the transaction network. The system time as at the issuer fraud scoring value added service may be used. Date and time may be expressed in Coordinated Universal Time (UTC) to allow them to be used effectively across an extended system.

In one approach, a fraud probability score can be provided to the issuer by the fraud scoring service to support the issuer in determining whether to authorise a transaction. This can be done by using a data element in the authorization request message that is sent to the issuer. For example, DE48.75 in the Mastercard CIS file format contains two fraud probability scores to be provided to the issuer - other approaches can be used in file formats used by other card schemes, or by repurposing other data fields defined in EMV standards.

Alternatively, a fraud scoring service can be configured to decline the authorization request on the issuer's behalf if the fraud probability exceeds a threshold - an "on behalf" decline. In such cases, the issuer may specify that if the determined fraud probability is 80% or greater, then the fraud scoring service should stand-in on behalf of the issuer and decline the transaction. With this arrangement, there is the possibility that some transactions will be declined by the issuer and some by the fraud scoring service (though only the issuer will be able to authorise a transaction).

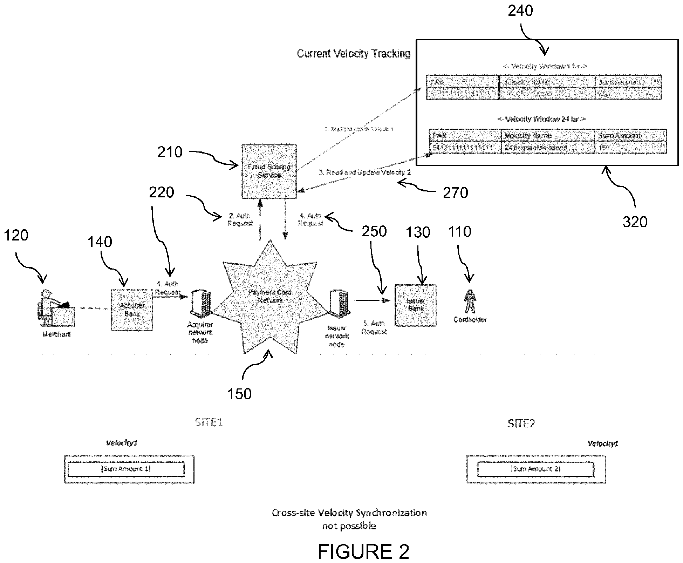

Figure 2 is a schematic diagram illustrating a request leg and a response leg of a conventional velocity tracking process. In order to help to prevent fraud, the payment card network 150 is here connected to a fraud scoring service 210. After a transaction has been established at a terminal of the transaction system, an authorisation request originates from the merchant. Before reaching the issuer 130, the authorisation request 220 is received by the fraud scoring service 210 via the payment card network 150. One or more velocity rules are defined by the fraud scoring service 210.

For example, system-wide (default) fraud scoring rules may be set up by the card scheme or transaction infrastructure provider. In addition, an issuer can specify its own customised rules. The system may have differentiated rules for each Bank Identification Number (BIN), which is included at the beginning of the PAN. For example, an issuer may have a more tolerant rule for high value transactions for a platinum card BIN compared with a regular card BIN.

A velocity rule may comprise a velocity rule identifier, a primary account number and a time window over which to aggregate. The rule can specify a condition and an action. For example, if the velocity exceeds a certain amount then decline the transaction or increase the probability if it being fraudulent and notify the issuer. A typical velocity rule may be, for example, the spend amount on gas in the time window of one week.

The type of transaction is based on several data elements defined by the IS08583 standard message format. Some exemplary data elements used by the applicant are MTI (message type indicator, defining message type, origin and purpose), DE3 (processing code, indicating transaction type) and DE61 (a reserved code relating to card verification). These data elements can be used to determine whether, for example, the transaction is an ATM withdrawal, a POS terminal transaction, an e-commerce transaction, a telephone order transaction, and whether the transaction is a credit card or a debit card transaction.

The type of goods or services a business provides is described by merchant category codes (MCCs), in the form of a four-digit identifier - this is DE18 in IS08583. The codes themselves and their classification are set in IS018245, which relates specifically to this purpose.

One or more velocities 240 are provided in their defined velocity windows (e.g. 1 hour, 24 hours, 1 month), wherein each recording in each velocity comprises the name of the velocity, a primary account number, and a sum amount. The velocities 240 are held in a transaction cache 320 associated with the fraud scoring service 210.

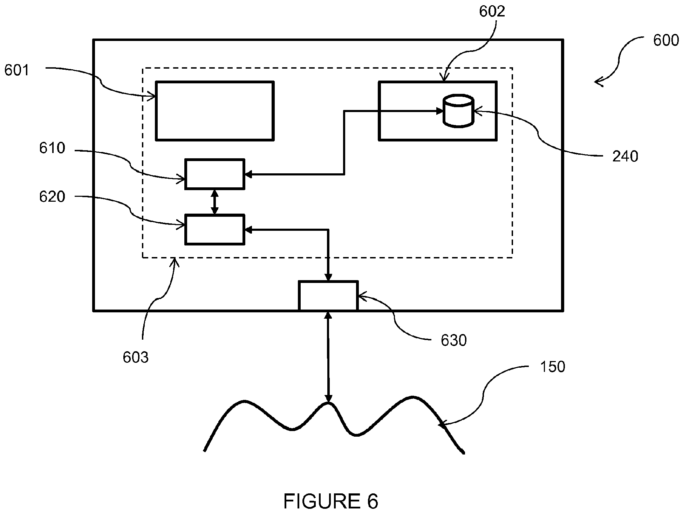

A computing node to control such a transaction cache 320 is shown in Figure 6. The computing node 600 here comprises a processing capability 601 and a memory capability 602 comprising the transaction cache 320, the processing capability 601 and the memory capability 602 between them defining a computing environment 603. The computing environment 603 here runs a cache management service 610 and a fraud scoring service 620. The computing node 600 is connected to the payment card network 150 through a networking connection 630, and will receive authorisation requests pending approval from the payment card network 150 so that they can be assessed by the fraud scoring service 620 using the transaction cache 320. The processing capability 601 and the memory capability 602 may be provided by one physical server with associated storage, or may be provided by multiple computing devices networked together. As will be described below, one suitable structure for use for the transaction cache 320 is an in-memory data grid.

Each velocity 240 is read, one by one, by the fraud scoring service 210 and compared to the velocity rules 230. A fraud score is generated by the fraud scoring service 210 largely determined by whether or not each of the sum amounts in the one or more computed velocities satisfies the one or more velocity rules. An authorisation request is sent to an entity known as an authorisation service bus (ASB). The authorisation request is then sent to a value added service for which the transaction qualifies. The fraud scoring service 210 may act as an authorisation value added service. The fraud scoring service can then either inject the fraud probability score into the request for sending to the issuer, or decline the request if it breaches a threshold. The authorisation request 250 is sent to the issuer 130 via the payment card network 150 with the fraud score.

The specifics of fraud scoring are not the subject of this disclosure and are not discussed further here.

A typical response leg of a conventional velocity tracking process is also shown in Figure 2. Upon approval of the authorisation request 250 by the issuer 130, an authorisation response is submitted to the fraud scoring service 210 via the payment card network 150. Each velocity is then updated 270 and the authorisation response is sent to the acquirer 140 via the payment card network 150.

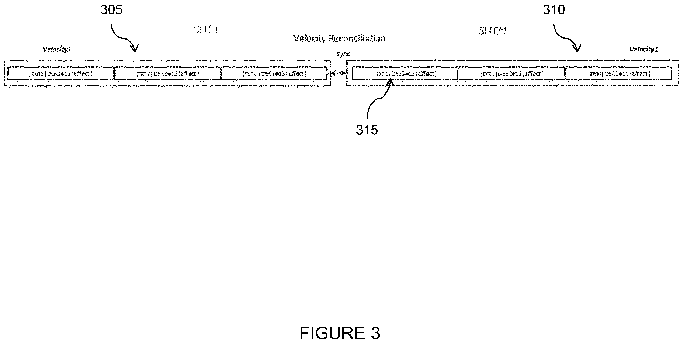

Currently, known methods are not adapted for effective cross-site velocity synchronisation. The present disclosure provides a method for reconciling velocities and is now described with reference to Figure 3. In accordance with an embodiment of the disclosure, Figure 3 illustrates velocity reconciliation between two or more different geographical locations 305, 310 (more specifically, between the transaction caches in these jurisdictions). In each of these geographical locations, there may be for example a computing node 600 as shown in Figure 6. For example, a global network may maintain multiple sites for Russia, China, US, and Europe. Once a domestic transaction associated with a primary account number has been completed in the UK, the local velocity would be updated as well as the velocity in all other sites for the primary account number in question. This approach also enables velocities between the different sites to be compared, enabling accuracy of the velocities to be determined.

In the approach shown in Figure 3, instead of a velocity sum, a velocity is held as a function record which contains a distinct transaction identifier 315 for each transaction contributing to that velocity. In embodiments, this transaction identifier is composed of transaction fields comprising or allowing straightforward recovery of transaction data elements, which may be transaction data elements defined by IS08583.

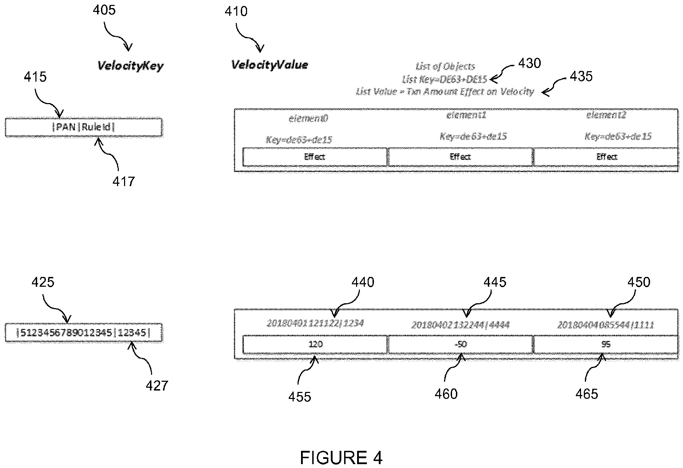

This information for each velocity may be stored using key-value pairs. As shown in Figure 4, the key 405 may comprise a PAN value 415 and a rule ID 417, whereby a format for the key may be predefined. For example, a PAN value [5123456789012345] 425 and Rule ID [12345] 427 may be represented in a key by a Java object containing both a JSON string, and concatenated values with a separator, i.e. [5123456789012345|12345].

Similarly, the value 410 may comprise a defined or known format. The value may be a Java list, for example, with the transaction identifier as the list key 430 and the transaction amount as the list value 435.

The transaction identifier may be unique, but should be at least sufficiently distinct that it will be effective to identify the transaction in the time frame under consideration. Various choices are possible for the distinct transaction identifier 315. As a transaction system will typically have both memory and bandwidth constraints, it is desirable to make a transaction identifier choice that enables information that may be used in the process of managing function records and determining velocities to be stored within the transaction identifier.

One consideration is whether the distinct transaction identifier should apply only to one transaction system (such as the Mastercard transaction system) or to multiple transaction systems (such as all systems conforming to EMV protocols). Either approach is compatible with the disclosure. One option would be to use the ISO 8385 fields DE63 (a proprietary field used for network data) and DE15 (settlement date).

For a given rule and a given PAN (i.e. the velocity key 405), the velocity value may comprise a Java list with, for example, three key-value pairs with the transaction identifier DE63 + DE15 as the list keys 440, 445, 450 and the transaction amount DE4 as the list values 455, 460, 465. Another transaction identifier choice may be MTI (message type identifier, as discussed above) + DE11 (STAN - system trace audit number) + DE7 (Transmission Time and Date) + DE32 (Acquiring Institution Identification Code), all of which are IS08583 defined fields - this could then be used in a cross-scheme approach, or if it were desired to provide consistency between different schemes.

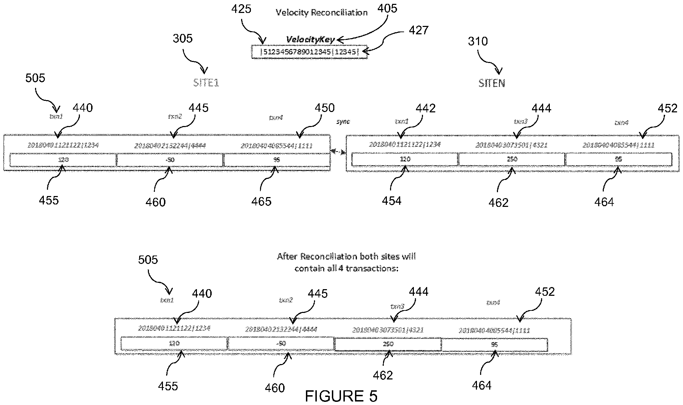

The distinct transaction identifier 315 provides a transaction ID 505 for each transaction, as shown in Figure 5. It is then possible to synchronise unique transaction keys in two or more different sites 305, 310. For example (see Figure 5), at a first site 305, for a given velocity key 405 comprising a given PAN value 425 and a given Rule ID 427, the velocity value may comprise a first key-value pair 440, 455 for transaction 1, a second key-value pair 445 for transaction 2, 460, and a third key-value pair 450,465 for transaction 4. At a second site 310, for the same velocity key 405, the velocity value may comprise a first key-value pair 442, 454 for transaction 1, a second key-value pair 444, 462 for transaction 3, and a third key-value pair 452, 464 for transaction 4. After reconciliation, the key-value pairs for transaction 1, transaction 2, transaction 3 and transaction 4 would be present at both sites 305, 310.

It is possible to tailor the frequency of synchronisation to the needs of the network. This approach may be used effectively in a cache architecture that is adapted for synchronisation across multiple parallel caches. This can for example be achieved by using an in-memory data grid (such as Pivotal GemFire).

The transaction cache may be associated with a pruning mechanism by which the transaction cache may be pruned of transactions which are sufficiently old that they will not contribute to any active velocity (for example, transactions sufficiently older than a day could be removed if no velocity extended back beyond the last 24 hours). This may not need a specific synchronisation mechanism if each transaction cache uses the same pruning rules.

The inclusion of a distinct transaction identifier enables reconciliation and synchronisation of velocity across multiple sites. It may be desirable for the transaction identifier to be unique, or unique within a transaction scheme, but for practical purposes it may be sufficient for the likelihood that two transactions will have the same transaction identifier is very low, or negligible during the timeframe over which that transaction will remain in a cache.

Many modifications may be made to the above examples without departing from the scope of the present disclosure as defined in the accompanying claims.

## Claims

1. A computing node comprising a processor and a transaction cache, wherein the transaction cache comprises one or more function records for each of a plurality of account numbers, wherein each function record comprises an account number, a function identifier, and transaction identifiers for any qualifying transactions, wherein a qualifying transaction is a transaction for that account number to be used in determining a value for a function identified by the function identifier, wherein the computing node is adapted to perform the following processes:
receive notification of an authorisation request for a transaction pending authorisation from a transaction network;
provide values for each of the functions associated with an account number from the function record for that function using the transaction identifiers in that function record;
if the transaction pending authorisation is authorised, adding a transaction identifier for that transaction to each function record for which that transaction is a qualifying transaction;
wherein the computing node is adapted to use transaction identifiers to synchronise the function records of its transaction cache with the function records of transaction caches of computing nodes in other geographic locations.

2. The computing node as claimed in any preceding claim, wherein synchronising the function records of the transaction cache with transaction caches of computing nodes in other geographic locations uses an in-memory data grid.

3. The computing node of claim 1 or claim 2, wherein each transaction identifier comprises a plurality of transaction data elements, wherein one of the transaction data elements is a transaction time.

4. The computing node as claimed in claim 3, wherein one of the transaction data elements is a transaction amount, and wherein the functions associated with the one or more function records are transaction velocities, wherein a transaction velocity is a sum of transaction amounts for all transactions for an account number conforming with a velocity rule for that transaction velocity in a predetermined period of time.

5. The computing node as claimed in claim 4, wherein at least one of the transaction data elements defines one of the following: a purchased product or service type, wherein one or more of the velocity rules relates to a defined purchased product or service type; a merchant type, wherein one or more of the velocity rules relates to a defined merchant type; or a transaction type, wherein one or more of the velocity rules relates to a transaction type.

6. The computing node as claimed in claim 4 or claim 5, wherein one or more of the transaction data elements comprised in the transaction identifier is defined by ISO 8583.

7. The computing node as claimed in claim 6, wherein some of the of the transaction data elements comprised in the transaction identifier are defined by ISO 8583 and some are specific to the transaction system.

8. The computing node as claimed in claim 6, wherein all of the transaction data elements comprised in the transaction identifier are defined by ISO 8583.

9. The computing node as claimed in any of claims 6 to 8, wherein the transaction data elements comprised in the transaction identifier comprise one or more of a Message Type Identifier, a System Trace Audit Number, a Transmission Date and Time, and an Acquiring Institution Identification Code.

10. The computing node as claimed in any of claims 4 to 9, wherein the computing node further comprises a fraud scoring system for the transaction network, wherein the fraud scoring system uses the transaction velocities in providing a fraud score for the transaction pending authorisation.

11. The computing node as claimed in claim 10, wherein the fraud scoring system is adapted to provide the fraud score to the transaction network for use in determining whether to authorise the transaction pending authorisation.

12. The computing node as claimed in claim 10, wherein the fraud scoring system is adapted to refuse authorisation for the transaction pending authorisation on behalf of the transaction network if the fraud score is within predetermined parameters for refusal.

13. A transaction network adapted to receive transactions pending authorisation from transaction network terminals and to route them for authorisation by or on behalf of payment device issuers, the transaction network comprising a plurality of computing nodes as claimed in any preceding claim.

14. The transaction network of claim 13, wherein the transaction network processes transactions in accordance with EMV standards.

15. A method of operating a transaction cache in a transaction system, wherein the transaction cache comprises one or more function records for each of a plurality of account numbers, wherein each function record comprises an account number, a function identifier, and transaction identifiers for any qualifying transactions, wherein a qualifying transaction is a transaction for that account number to be used in determining a value for a function identified by the function identifier, the method comprising:
receiving notification of an authorisation request for a transaction pending authorisation from an transaction network;
providing values for each of the functions associated with an account number from the function record for that function using the transaction identifiers in that function record;
if the transaction pending authorisation is authorised, adding a transaction identifier for that transaction to each function record for which that transaction is a qualifying transaction;
using transaction identifiers, synchronising the function records of the transaction cache with the function records of transaction caches of computing nodes in other geographic locations.
